# EUROPEAN PATENT SPECIFICATION

(11) **EP 3 966 558 B1**
(45) Date of publication and mention of the grant of the patent: **11.03.2026**
(21) Application number: 20725218.0
(22) Date of filing: 01.05.2020
(51) Int. Cl.: G01N 21/85, G01N 33/18, G01N 21/84, G01N 17/00, G01N 21/94

(54) **SENSOR**
SENSOR
CAPTEUR

(30) Priority: 10.05.2019 GB 201906658
(43) Date of publication of application: 16.03.2022
(73) Proprietor: Solmicrotek Ltd, Lichtfield, Staffordshire WS14 9TZ (GB)
(72) Inventor: PRICE, Sean, Lichfield Staffordshire WS14 9TZ (GB); LEWIS, John, Lichfield Staffordshire WS14 9TZ (GB)
(74) Representative: Clarke, Alan
(86) International application number: PCT/IB2020/054130
(87) International publication number: WO 2020/229931

(56) References cited:
- DE-U1- 20 318 962
- US-A1- 2006 254 343
- US-A1- 2015 191 765
- US-A1- 2015 338 350
- US-A1- 2016 272 933
- US-A1- 2018 017 490
- US-A1- 2018 067 111
- US-A1- 2019 002 304
- US-B1- 6 498 862
- MATTHIAS FISCHER ET AL: "Design and field application of a UV-LED based optical fiber biofilm sensor", BIOSENSORS AND BIOELECTRONICS, ELSEVIER SCIENCE LTD. UK, AMSTERDAM, NL, vol. 33, no. 1, 25 December 2011 (2011-12-25), pages 172 - 178, XP028460751, ISSN: 0956-5663, [retrieved on 20120103], DOI: 10.1016/J.BIOS.2011.12.048
- JOANA AZEREDO ET AL: "Critical review on biofilm methods", CRITICAL REVIEWS IN MICROBIOLOGY, vol. 43, no. 3, 21 November 2016 (2016-11-21), GB, pages 313 - 351, XP055710789, ISSN: 1040-841X, DOI: 10.1080/1040841X.2016.1208146

## Description

The present invention relates to the field of sensors, as used in microbiological analysis. In particular, it relates to the field of sensors used in the detection of biofilms, e.g. as produced by Pseudomonads or the like and which may contain significant organisms which may include Legionella, *E-coli, Intestinal enterococci, Staphylococcus aureus* or the like.

Biofilms are created when certain bacteria are allowed to grow in fluids, typically water, but in others too. These bacteria can be detrimental to human health if allowed to build up above threshold levels. They can also cause blockages in pipework, strainers and filters, and lead to reduced efficiency in heating and chilled systems, etc. Problem areas can be water tanks, pipework, boiler systems and any parts of a system with reduced flow rates, etc. as may be seen or used in hospitals, factories, domestic and agricultural environments among others, including in drinking water supplies. The biofilms typically manifest themselves as a slimy substance that tends to stick to pipes and fittings, which, when conditions allow, accumulates over time if no remedial action is taken. Legionella, which can cause a potentially fatal pneumonia if aerosols of contaminated water are inhaled, is one of the significant organisms that can readily thrive in the biofilm.

Regulations in the European Union and elsewhere mandate certain conditions under which water systems must operate, to mitigate against the growth of undesirable bacteria. For example, hot water systems used for washing or showering etc. must be maintained at or above designated temperatures. However, there is still a need to monitor for the presence of such bacteria, for example when testing a water system to see whether mitigations, such as the temperature control discussed above, or e.g. chemical or biocidal treatments of water systems are working.

There is thus a need to detect the growth of biofilms and remove them when detected. Current detection methods rely on taking samples of some kind from the systems, and analysing them in a laboratory. One such technique is described in 'Critical review on biofilm methods', Critical Reviews in Microbiology, 43:3, 313-351, DOI: 10.1080/1040841X.2016.1208146.This is a relatively slow and expensive technique, given the need to collect the sample, transport it, and carry out the analysis. The apparatus that is placed in the liquid system is also very expensive, making it suitable only for larger or more critical installations.

The document US 2019/002304 A1 discloses a method and an apparatus for detecting, monitoring and controlling deposit formation on wetted surfaces. More specifically, it is directed to the detection and classification of scaling and fouling in water-intensive processes, based on collected visual data from surfaces in process plants or from dedicated monitoring cells.

The document US 2015/338350 A1 relates to a device for monitoring a biofilm, which can monitor a formation state of the biofilm by using a shadow image of the biofilm.

The publication from MATTHIAS FISCHER ET AL: "Design and field application of a UV-LED based optical fiber biofilm sensor", BIOSENSORS AND BIOELECTRONICS, ELSEVIER SCIENCE LTD. UK, AMSTERDAM, NL, vol. 33, no. 1, 25 December 2011, pages 172-178, ISSN: 0956-5663, DOI: 10.1016/J.BIOS.2011.12.048 describes a device for monitoring a biofilm, and more particularly, refers to a device for monitoring a biofilm, which can monitor a formation state of the biofilm by using a shadow image of the bio-film.

The document US 2015/191765 A1 discloses a system for measuring biofilm streamers.

The document US 2016/272933 A1 discloses an apparatus for measuring biofilm surface properties with a microscope system.

The document US 2018/067111 A1 discloses a method of determining a phenotype of cells in a biological sample, said cells are incubated on a diffraction grating containing an ordered array of compartments having lateral dimensions.

Embodiments of the invention have the object of addressing one or more of the above shortcomings of the background art.

According to a first aspect of the present invention, as defined in claim 1, there is provided a sensor for the detection of biofilm in a fluid flow system comprising a substrate upon which a biofilm may grow, a camera and an illumination means, wherein the substrate is arranged in use to be located in-situ and submerged in the fluid flow system, the camera being arranged to take a plurality of images of the substrate, and the sensor being arranged to provide an image of the substrate and the spatial extent, shape, extent, colouration, and/or motion of any biofilm present, and further wherein the camera has a lens arranged to view the substrate in focus, whereby the substrate comprises of a grid of holes allowing background light to pass therethrough, and wherein the illumination means is arranged to provide a light background in contrast to a dark substrate.

A sensor according to embodiments of the present invention provides a means allowing the imaging of biofilms in-situ, whilst also providing for the sensing thereof without the delays and costs associated with the requirement to remove samples to a laboratory. The sensor may be arranged to provide an alert upon detection of any biofilm, and the timeliness of such alerts and the relatively inexpensive nature of the design provides a clear advantage compared to the currently available methods for in-line biofilm monitoring. The image may be provided to a display screen, that may be collocated with the sensor, or may be a remote screen, or may be sent over a network for remote storage, processing and/or display.

Some embodiments may have a display or storage located adjacent to the sensor, or at some distance thereto (e.g. over a network). There may be a control means, such as a control panel that provides user interaction with the sensor and/or processing means associated therewith. The display and control means may comprise a system arranged to replay the latest image, or to tell the sensor to take a new image, or to replay video etc.

The display may, in some embodiments, have an indication of, according to its processing (as described herein), the likelihood of there being biofilm present. It may also give an indication of the extent of any such biofilm it thinks is present.

Biofilms have a characteristic appearance, which renders them suitable for imaging and identification, being distinct from most forms of ordinary detritus or particulates that may also be within the image. Biofilms tend to have a characteristic "pondweed" type appearance. The spatial extent, shape, extent, colouration, (and for video) characteristic motion in the stream of fluid and detail of growth structures that are particularly indicative of cellular growth of the substance on the substrate may be used to aid a decision of whether biofilm is present or not. Such a decision may be made either by a human, or by a suitably trained machine vision system. In the case of biofilm growing in water the biofilm often tends to look like an organically-growing 'pondweed-type' structure that wafts in the fluid flow and is thus clearly identifiable as biofilm. Thus, an image of a resolution able to capture such details (such as being able to resolve detail at approximately 0.001mm to 0.01mm) enables a human or machine vision algorithm to make a decision with good accuracy as to the presence of biofilm. Of course, resolutions outside of this range, such as 0.02, or 0.05mm will also be of use for this purpose.

The use of a focused image of the substrate, and any biofilm thereon, also allows for more convenient identification of biofilm, and also the rejection of other matter, such as non-biofilm detritus.

The fluid flow system may comprise a part of a pipe, tank, pump, tap, shower, pool or other reservoir, or similar structure used to hold, or induce or direct the flow of a fluid, where such a fluid is capable of allowing or promoting the growth of biofilm. Typically, the fluid will be a liquid, but may in some embodiments be a gas or a mist of liquid particles within a gas. Therefore, in some embodiments the sensor may be located in a region subject to flowing fluid.

The sensor may advantageously further comprise of a fitting having a mount for the camera and the light source, that has one or more connection ports allowing it to be installed in a fluid flow system. The sensor may conveniently be arranged to be retro-fitted to an existing fluid flow system. The fitting may therefore have ports having connectors, such as industry standard connectors, for screwing or otherwise attaching to existing pipework etc.

The fluid flow system may form part of a water supply, or may be used for other liquids, such as fuels, oils, beverages or others used in industrial, commercial or domestic situations.

According to the invention the substrate is comprising a material having holes that allow a background to be viewed in contrast to the substrate.

The holes, cut-outs or formations may conveniently be arranged as a regular pattern, such as a rectangular (including square) grid of generally rectangular apertures. The apertures may alternatively comprise an irregular array, or an array of apertures of differing sizes, or shapes, and hence of differing dimensions. For example, the apertures may vary in size from smaller apertures through to larger apertures in different locations upon the substrate, or may vary in shape. The substrate may advantageously comprise generally of a square, rectangular, circular or other regular or irregular shape, into which apertures are formed, cut, or otherwise arranged.

The substrate may therefore comprise in some embodiments of a sheet material that is etched, stamped, laser-cut or otherwise machined to create the various formations or cut-outs as described herein.

In some embodiments therefore the substrate may comprise of an array of holes in a sheet.

In some embodiments the substrate may be marked with a serial number or other unique identifier, or reference code. This identifier may be used to identify a location, time of insertion into the fluid flow system, etc. and may be stored in a database along with other information from the sensor. The identifier may be human and/or machine readable, and advantageously may be visible in any images recorded by the sensor.

The substrate may alternatively comprise of a mesh material, such as a woven mesh. Conveniently, it may be formed from a woven metal, such as stainless steel or copper wire. The substrate may be metallic, either in sheet form, or a mesh, as described above. It may be, in some embodiments, made from stainless steel, copper or brass, or other metal. Other materials that may be used for the substrate include ceramics, plastics, or glass.

According to examples outside the claimed invention, where the substrate is made from a transparent material then it may comprise a flat or curved sheet not having any holes etc. formed therein, as the formation of any biofilm will tend to be visible against a background due to the transparency of the material.

The substrate may conveniently be arranged to be replaceable. The sensor fitting may further comprise of isolation valves allowing the substrate to be isolated from the flow of fluid. This therefore facilitates convenient removal of the substrate e.g. for cleaning, replacement or for micro-biological analysis in a laboratory. Such laboratory analysis could identify the specific type of bacteria present within the biofilm, thus allowing selection of the most appropriate method for biological control.

The holes, apertures, cut-outs or other features in the substrate (where present) may be sized so as to present a readily distinguishable image between a clean substrate and one where there has been growth of biofilm. A preferred feature size is approx. 200um, although this can vary significantly, dependent upon e.g. the magnification of the lens of the camera, the viewing distance etc. Typical feature sizes may range therefore from 20um to 1000um, but may in some circumstances go outside of this range. The spacing between features may typically range from 20um to 200um, but again some embodiments may have different spacing sizes outside of this range.

The substrate may comprise of formations in one or more edges thereof, that provide e.g. slots, indents etc. that are not entirely surrounded by substrate material. These may have a feature size as described above, or may have a different feature size.

The substrate may be planar, or may be curved in shape. For example, it may have a curve to allow a greater proportion of it to sit within a focal depth of field of the camera, or otherwise be adapted to take advantage of various optical characteristics of the camera.

Acccording to the claimed invention the substrate comprises of a grid of holes allowing background light to pass therethrough. The holes, formations, indents etc. thus allow the camera to receive light from the background. The substrate may form a silhouette, or relatively dark region in images taken thereof by the camera. It should be noted though that the natural translucence of biofilms means that it is unlikely that any true silhouettes will be produced, although it may occur e.g. if the buildup is particularly thick, or if the background light provides sufficient contrast compared to the dynamic range of the camera. The background is brighter in relation to the substrate. This allows biofilm growth to be visible when seen (either by a human or machine) when growth is sufficient.

In some embodiments the substrate may comprise of a plastic or glass sheet, such as a plane glass sheet. In some embodiments, the sheet may be oriented with respect to the camera to allow a first source of illumination to come through the substrate to the camera, whilst a second source of illumination is reflected by the sheet into the camera. By switching between the light sources it provides a convenient means to image any biofilm either lit from behind, or from the front. Such a lighting arrangement may also be used with other substrate types also. In some embodiments therefore the substrate may be substantially transparent.

In some embodiments the substrate may be made from a similar material from that used in some or all of the fluid flow system. For example, where the fluid flow system comprises of a metal tank, or metal pipework, the substrate may be made from the same metal. This therefore provides a similar environment on which the biofilm may grow, and so may be more representational of biofilm that may be forming in other parts of the system. Such a substrate may have holes, perforations etc. as explained herein, or may, according to an example outside of the claimed invention, comprise a sheet that is non-perforated, and which is lit from the front so as to reveal any biofilm forming thereon.

The substrate may conveniently be arranged to sit in a cartridge, allowing for simple replacement.

The substrate is preferably mounted in the flow of fluid in an orientation whereby it provides minimal impact on the fluid flow. Thus, a primary direction of flow of fluid is preferably the same as that of the plane of the substrate. This allows biofilm to form whilst reducing the chances of the substrate acting as a filter for particulates or other contaminates within the fluid.

Other orientations may be used in some embodiments however, such as being mounted at a small or larger acute angle to the direction of fluid flow, or perpendicular thereto. The hydrodynamic conditions that exist within a water pipe - varying from smooth, laminar flow to turbulent flow - have a significant influence on the growth of biofilm within a pipe. The overall shape, positioning and orientation of the substrate with regard to the flow can be altered to achieve the desired hydrodynamic conditions.

In some embodiments a filter, such as a gauze or mesh etc., may be arranged to prevent detritus that may be present in the fluid from interfering with the substrate. This may be advantageous, for example, in applications where the fluid is more likely to be polluted with particulate matter or similar materials which may become attached to the substrate and so interfere with any biofilm growth, or images taken thereof.

Embodiments of the invention may provide an optical system, comprising a lens, that can provide sufficient spatial resolution to resolve characteristic details of substances accumulating on the substrate. It has been found from experimentation that sediment and detritus tend to appear as an amorphous mass, but biofilm has identifiable features, due to its characteristic, 'pondweed-like' appearance. One or more of the shape of the growth, the extent, growth movement in currents, overall colouration and characteristic, detailed distribution of colour and shading of the substance on the substrate may be used to inform the decision of whether biofilm is present or not. In the case of biofilm growing in water, the biofilm often looks like an organically-growing 'pondweed-type' structure that is clearly identifiable (by a human observer, or by a suitably trained machine vision system) as biofilm. Alternatively, some types of biofilm may have a characteristic, glossy, jelly-like appearance.

Also, after growing to a reasonable size, the biofilm may start to move in the fluid current in a characteristic manner that can also aid identification and classification. Biofilm that grows with a pondweed-type structure wafts in the fluid flow and is thus more clearly identifiable as biofilm. The flow of fluid past the substrate will tend to set jelly-like biofilm into a characteristic vibration that can be picked up in video images or repeated still images. This motion provides the viewer with key information on the consistency of the material on the substrate. This may help with identification of the type and extent of the biofilm. In contrast, sediment trapped on the mesh tends to be immobile in the fluid flow.

All the above characteristics, and others too, aid in identifying biofilm growth from detritus etc.

The background may be arranged to be a reflective or transmissive surface, that is preferably diffuse in nature. Advantageously, the background comprises of a diffuse transmissive material such as glass, behind which sits the illumination means. The substrate may therefore advantageously sit between the illumination means and the camera.

Where a wall or part thereof of the fluid flow system comprises of a translucent or transparent material then the wall may itself comprise or be adapted to act as a diffuser.

According to the claimed invention the illumination means is arranged to provide a light background in contrast to a dark substrate. The illumination means may comprise of a light source such as a light emitting diode (LED), fluorescent, or incandescent light, or other light source. The illumination means may be an illuminator. The illumination means may be a generally monochrome (or narrow bandwidth) light source, or may be, for example, a white, or generally broad-spectrum illumination. The illumination means may further be arranged to illuminate in the ultra-violet region, as well as the visible region of the spectrum.

Alternatively, in some embodiments, which are however not covered by the claims, the sensor is arranged to provide a dark background in contrast to a light (or illuminated) substrate. This is as is often used in conventional dark-field microscopy. This would tend to illuminate any biofilm directly, so providing an image of the biofilm as opposed to a silhouette (or near silhouette). Such an illumination is potentially beneficial in some applications. In either case, the focused imaging of any biofilm aids identification thereof.

The camera conveniently comprises of a sensor, such as a Charge-Coupled Device (CCD) or a CMOS sensor, and a lens. The lens is arranged to focus on the substrate, or onto a region where biofilm is expected to form. The lens may sit behind a window looking into the fluid flow system. The window may be glass, Perspex, or any other suitable material. Alternatively, the lens material may form a part of the wall of the fluid flow system, or the lens may be in the fluid flow system.

The lens may conveniently have a fixed focus, or a focus mechanism, such as a screw thread, that is arranged to be set up during installation, or for occasional adjustment as part of a maintenance procedure, rather than a regular operation. This allows a lower cost system to be produced, without the need for a focusing mechanism that is operative in-use. Alternatively or as well, some embodiments may allow for the introduction of optical spacers, or have a variable focus lens, which may be useful in some systems where the focus may need to be changed at intervals, such as when being adjusted, serviced or commissioned. The variable focus lens may have a motor, or a manual control for changing focus. For example, where different liquids are used in a particular installation of an embodiment of the invention, those different liquids may have different refractive indices, which may change the focus point of the lens.

In some embodiments the substrate may be positioned in relation to the lens so that a part of it is in focus during one set of conditions (such as where a first fluid is used in the fluid flow system, or the fluid (and hence at least a part of the sensor) is at a first temperature), and another part of it is in focus during another set of conditions (e.g. where a fluid having a different refractive index or at a different temperature) is being used. This therefore provides at least some benefits of a variable focus system without the requirement for a mechanism for moving the lens in use.

In some embodiments, multiple lenses, or multiple cameras may be used to get different views of the substrate (for example from different angles, different magnifications, or at different focus points). The camera may have, in some embodiments, a lens of a variable magnification (i.e. a zoom lens), e.g. to allow an operator to get a closer view of biofilm if required.

In some embodiments the camera may be adapted to record video image sequences. This may be a true video format such as MP4, or may be a succession of still images taken in quick succession, such as every second, every half second, or less. Of course, longer intervals, such as a frame rate of seconds to minutes, or even hours, could be done also.

The camera may be arranged in some embodiments to supply images or videos taken of the substrate to a remote computer system, such as a server, or standalone system. This allows the image to be monitored by a controller, and/or stored for future analysis or record.

In some embodiments the sensor further comprises a processor adapted to detect changes in the video image sequence over a short term, such as less than 10 seconds, or less than 30 seconds, less than 2 minutes. Changes that occur in such time frames are likely due to movement of biofilm, or possibly also due to detritus appearing in the image.

Advantageously, some embodiments may have an associated memory, and be arranged to run instructions stored on the memory that implement a machine learning algorithm for the detection of short term changes in the video image sequence. The machine learning algorithm may be trained to look for changes in the video image sequence characteristic of a biofilm moving in turbulent fluid flow. Such training may be done with a library of previously obtained videos of biofilm, as would be understood by those skilled in the relevant arts.

Some embodiments may have means to aid the detection of biofilm, by inducing movement of the biofilm relative to the substrate. Thus, they may comprise means to create a turbulent fluid flow around the substrate. Embodiments may have differing ways of doing this. Some embodiments may use a natural flow of fluid passing over the substrate, and may cause a turbulence in such flow. Various means may be used to induce a turbulent flow. For example, positioning an obstacle upstream of the substrate may be used. The obstacle may be, for example, a cylinder having its axis perpendicular to the direction of fluid flow. Alternatively, a turbulent flow between the substrate and fluid may be generated by moving the substrate. Thus, some embodiments may comprise a means for moving the substrate. Such means may comprise a mechanical attachment, piezoelectric crystal (e.g. attached to the substrate, with a drive cable supplying power thereto), magnetic coupling etc. as would be understood by someone of ordinary skill in the art.

Some embodiments may have a substrate that is arranged to flex with the passing currents. Such flexing will tend to induce movement in any biofilm present, which will make it easier to detect using the processor.

Movement of the substrate may, in some embodiments, be done at specifically chosen frequencies. Such frequencies may be chosen to match an expected resonant frequency of biofilm deposits on the substrate.

The images may be presented on monitor screens for human controllers to observe. The human operators may therefore be able to observe a build-up of biofilm and take appropriate action to get the problem rectified. The computer system may be arranged to show past and present images, to allow easy comparison of such images to highlight any formation of biofilm. Operations, such as image subtraction, or other such image processing, may be performed on the images to highlight any changes over time.

Some embodiments may further comprise a processor and memory, either co-located with the sensor, or located remotely, and accessible via a wired or wireless network connection. The processor may be arranged to execute instructions from the memory that implement image processing functions or algorithms to perform the tasks, such as image comparison or subtraction, or machine learning such as that described herein. Implementation of the image processing functions and algorithms will be known to the normally skilled person. The system may be arranged to compare images taken at different times, and to provide an indication or alert if there is a difference commensurate with a growth of biofilm on the substrate. This may be done in various different ways. For example, a comparison of how many darker pixels are present in an image as compared to a reference, or previously recorded image, will tend to indicate a build-up of biofilm on the substrate.

Embodiments of the invention may therefore be arranged to detect variations in images of a substrate taken at different times.

The alert may comprise of one or more of a visual alert, an audio alert, or an email, or text message or other communication message sent to relevant parties.

Alternatively or as well, a machine learning / machine vision algorithm may be used to identify a build-up of biofilm on the substrate. This may be trained with images of a substrate taken by a camera, with the substrate having various amounts of biofilm build-up upon it (including zero build-up). It may then, when in a detection mode, identify when the build-up of biofilm has reached a threshold level. Other machine vision algorithms will be known by the normally skilled person.

The sensor may be used on its own, or may be combined with other sensors, such as temperature, flow rate, reduction-oxidation (redox) sensor, or others. The additional data provided by the other sensors may be recorded along with images from the sensor (or meta-data from the images).

Some embodiments of the invention may use a camera capable of recording colour images. This may be useful, for example in providing further information relating to the general type of biofilm present on the substrate. A colour camera may also be used to measure properties of the fluid present in the system. When combined with a chemical dosing system for eradication or reduction of bacteria within the fluid flow system, one such property may be a colour of the fluid. For example, a chemical additive may have a certain colour (either in its normal form, or added via a dye or other such additive), that is different from a natural colour of the fluid in the system. The colour of the fluid as recorded by the sensor may then give an indication as to the dosage level present in the fluid. This may be controlled in a closed-loop feedback arrangement to control the level of additive used in reducing or eradicating the bacteria. A monochrome camera arranged to record images illuminated with different coloured light sources may also be used for this purpose, by recording multiple images each illuminated with a different colour, and comparing them to detect the presence of the colour of the additive.

Embodiments of the invention may further comprise a mitigation or rectifying means that is activated when a build-up of biofilm has reached a threshold level. This may be for example when an automated system has detected its presence above a threshold, or may be activated by a human operator on seeing a build-up on a monitor screen. The rectification means may be anything suitable, according to the system in which the sensor is mounted. For example, it may comprise of a chemical additive or biocide being introduced to the fluid, or may comprise a raising of temperature in a system to kill off the bacteria, or may comprise the use of ozone gas added to or dissolved into the fluid, or may comprise of some other method.

Thus, embodiments of the invention may comprise a sensor and an ozone generation means, the ozone generation means being arranged to be controllable in response to biofilm levels detected on the substrate.

Alternatively or as well, embodiments of the invention may comprise a sensor and a chemical dosing system. The sensor may have a colour camera and when used with a chemical dosing system, a colour parameter of images taken by the camera, such as the colour, may be analysed to provide a measure of the quantity of the chemical from the chemical dosing system present in the fluid flow system.

Thus, according to a second aspect of the invention, as defined in claim 11, there is provided a system comprising a biofilm sensor as described above, and a rectification means, wherein the system is arranged to activate the rectification means if a biofilm detection above a predetermined threshold is detected.

Embodiments of the invention may further comprise a computer comprising a processor and memory, that has instructions that direct the processor to access images from the camera and to implement an image processing algorithm to detect evidence of the build-up of biofilm on the substrate. Such an embodiment may have the computer co-located with the sensor, or may be distributed in nature, with the computer located separately, such as across a network, from the sensor.

According to a third aspect of the invention, as defined in claim 13, there is provided a method of sensing biofilm in a fluid flow system comprising arranging a sensor as claimed in any of the above claims in the fluid flow system, and monitoring an output of the sensor for signs of build-up of biofilm on the substrate.

Embodiments of the invention will now be described in more detail, by way of example only, and with reference to the following Figures, of which:
Figure 1 diagrammatically illustrates a first embodiment of the invention as affixed to a pipe;
Figure 2 diagrammatically illustrates two different substrates for use in some embodiments of the invention;
Figure 3 shows photographs of biofilm build-up with time on a wire mesh substrate;
Figure 4 diagrammatically illustrates a top level fluid flow system incorporating a sensor and an ozone generation cell;
Figures 5a-f show photographs of a substrate taken at various time intervals following a disinfection cycle operating in a first mode of operation; and
Figures 6a-f show photographs of a substrate taken at various time intervals following a disinfection cycle operating in a second mode of operation.

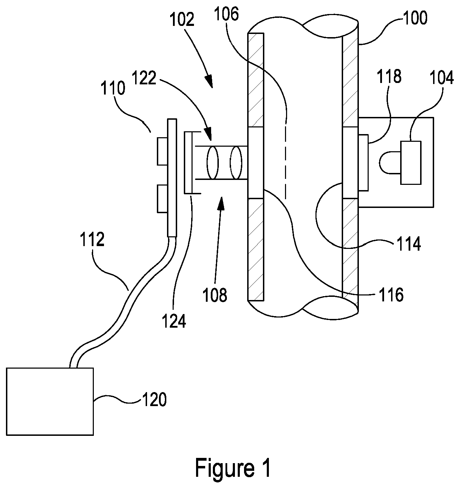

An embodiment of the invention is shown, not to scale, in Figure 1. Here, a pipe 100 has fitted thereto a biofilm sensor indicated generally at 102. The biofilm sensor 102 comprises of an illuminator 104, a substrate 106, a camera 108, supporting electronics 110 and connection lead / data cable 112. It further comprises of windows 114, 116 let into the pipe 100, and an optical diffuser 118.

It will be appreciated that this is a simplified drawing, which for the sake of brevity does not show elements such as power supplies, physical mountings (e.g. of the substrate) and details of electronics etc. It would be obvious to the normally skilled person that such elements are required to produce a functional unit, and would also be obvious, given the teaching herein, how to implement such features.

The illuminator 104 is a white light LED, light from which is aimed at diffuser 118. This therefore produces a relatively uniform intensity of illumination across the area of the diffuser. Window 114 permits light from the diffuser 118 to pass across the pipe, past the substrate 106 to window 116. Behind the window 116 sits the camera 108 that is arranged to record images of the substrate 106 with the diffuser in the background.

As the light from the diffuser 118 illuminates a rear side of the substrate 106 (as seen from the camera), then the substrate will appear dark in images captured by the camera, with holes or perforations in the substrate appearing much brighter as they allow the diffuser to be seen.

The windows are clear glass, so providing a good view of the diffuser by the camera. In some embodiments, window 114 may also act as a diffuser, after being given e.g. a suitable surface treatment to roughen it to disperse light impinging thereon.

The substrate is mounted in a mount (not shown) to hold it in a fixed position in relation to a sidewall of the pipe 100, the mount also allowing fluid flowing in the pipe to come into contact with the substrate, whilst providing minimal disruption to the flow of fluid through the pipe. The substrate is mounted with its plane in line with an axis of the pipe (i.e. a direction of flow of fluid through the pipe). This again minimizes disruption to fluid flow through the pipe.

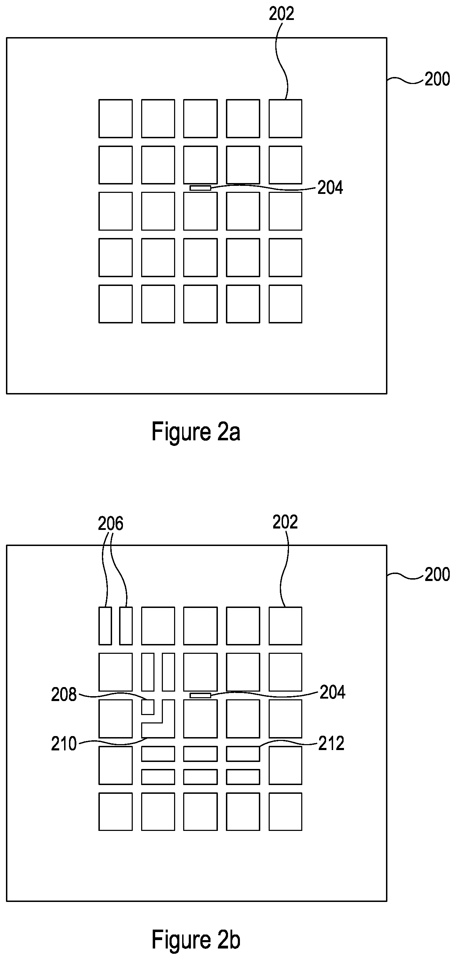

The substrate, as can be seen more clearly in relation to Figure 2a (not drawn to scale), comprises of a stainless steel sheet 200 that has been laser cut with an array of square holes e.g. 202. Each hole is 200um across a side, with a separation between neighbouring holes of 50um. The stainless steel sheet has a thickness of 75um, and an overall size of 5mm x 5mm square. It will be clear to the normally skilled person that a wide variation in these parameters, such as in size and shape of the holes, dimensions of the substrate and materials, will be possible whilst staying within the scope of the invention.

The camera comprises of a lens 122 and a CCD sensor 124. It may comprise for example of a web cam or other similar low-cost camera, with a suitable lens for obtaining a close-up image of the substrate. Typical magnifications provided by such cameras are between approximately 20x to 400x magnification, and a magnification is chosen to provide a good image of the substrate. Typically, for the substrates described herein, a magnification of between 50x and 200x would be used. The lens is arranged to view the substrate in focus. Due to the very shallow depth of field that such an optical system will have, the diffuser will be very out of focus. This is beneficial in that is further acts to diffuse the lighting coming from the illuminator.

Although not used in this embodiment, some other embodiments may have a discrete aperture as part of the camera, typically positioned adjacent to, or as part of the lens. This allows a degree of control over the depth-of-field, e.g. to allow an increase of the depth of field to counter any problems caused by defocusing (as may occur due to temperature variations etc.).

The lens is designed to have a fixed focus in operation, but it is mounted on a screw thread, so that its position can be varied slightly during installation and during any maintenance procedures so as to establish it in the correct position, allowing the substrate to be viewed in focus, and for adjustment if required.

Images recorded by the camera are transferred, via electronics 110 through cable 112 to a computer system 120 where they are stored and processed. The computer system 120 is located separately from the sensor in a control room, but in some embodiments may be co-located with the sensor. Other embodiments may have a computer connected across a network such as a WIFI or Ethernet network, or across the internet or mobile phone network.

The computer system has a display that is able to show images produced by the camera, to allow for convenient monitoring.

Further computer systems (not shown) may be connected to computer system 120 to retrieve stored images for viewing or further processing, or to retrieve results of image processing that has taken place on the computer system 120.

Figure 2 shows two different substrates for use in embodiments of the present invention, the first of which has been briefly described above. The substrate of Figure 2a comprises of a set of regular square apertures 202 laser cut into the stainless steel sheet 200. As will be seen later, the apertures allow biofilm to grow in them, where it is conveniently imaged by the camera. The substrate 200 further has a unique serial number etched into it that is visible to the camera in use. The serial number is recorded on installation, along with the date and location of fitting, with the information being stored in a database. Thus, when combined with the database the image also effectively records this additional information which may be useful in any later investigation.

The serial number 204 is written in very small writing so that it is most conveniently viewed by the camera. It may also be written in a font, or with appropriate symbols that are particularly convenient for machine reading. Other embodiments may have the serial number written in multiple different places on the substrate, and on each side thereof, to allow for more convenient reading. Some embodiments may have the serial number written, instead or as well as, in larger writing visible to a human without the use of a high magnification lens.

Figure 2b shows an alternative substrate, again comprising of a metal sheet 200 with apertures e.g. 202 laser cut into it. Like reference numerals refer to like elements. Again, it has the serial number 204 etched into it. This embodiment however does not have the same regular array of apertures. Instead it has apertures of varying size and shape. Apertures 206 comprise of vertically aligned (as presented in this image - but not necessarily when installed in a system) rectangular holes, this providing a smaller gap horizontally as compared to vertically. The smaller gaps may promote growth of biofilm that is more easily visible at the early stages, due to a given quantity taking up a larger percentage area of the aperture, as compared to larger apertures. Also, it can provide benefits for biofilms that may grow with different characteristics to others, such as some that feature more string-like growth, as opposed to others that may have a more clumped formation.

Other aperture formations in this embodiment include smaller squares 208, irregular shapes 210 and horizontally cut rectangular holes 212.

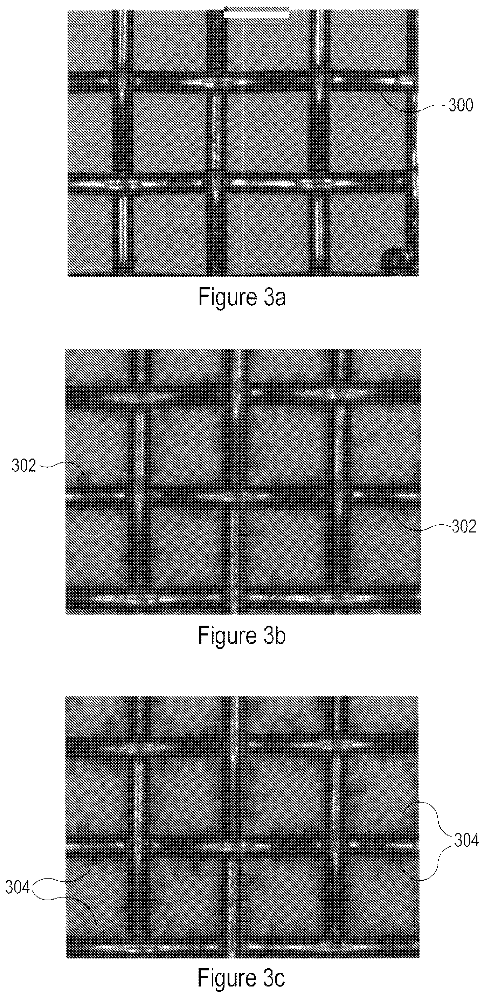

Figure 3 shows examples of biofilm growth on a substrate 300 according to an embodiment of the present invention. The substrate used is a stainless steel wire mesh, No #100, having 100 wires per inch, with a wire diameter of 56um and an aperture having a side of 198um. A series of photographs are shown of a substrate that has been immersed in a water tank in which was growing Pseudomonas aeruginosa bacteria. The mesh was held vertically and imaged with a microscope, and an illumination source was place opposite the microscope.

Figure 3a is a photograph of the substrate just after immersion, before any biofilm had had a chance to build up. Other than minor defects in the wire mesh it can be seen that the mesh is clean and uniform.

Figure 3b is a photograph of the mesh after one day of continual immersion. It can be seen that there is a very noticeable build-up e.g. 302 of bacterial material, i.e. biofilm, in the mesh apertures. This would be detectable by a human observer, or by a suitably trained machine learning algorithm. A system such as Google(RTM) Tensorflow may be trained with images taken by a system, and categorized by human observers as being either clean from signs of biofilm, or having various levels of biofilm infestation. Once trained, the algorithm is able to categorise live images from an installation and decide automatically whether there is any biofilm present beyond a predetermined threshold, as provided for in the training. Once the system is in use, then the images recorded can also be used to continue the training process. Of course, other machine learning algorithms may be used.

Figure 3c shows a photograph of the mesh after two days of immersion. The biofilm 304 has visibly extended further, and hence is even more noticeable.

Following detection of a build-up of biofilm, either by a human observer or by an automated system, then the computer 120 is arranged to instigate a rectification system. This comprises, in an embodiment, activation of an ozone generation cell that is plumbed into the fluid flow system. This comprises of a cell that, when activated (often, but not necessarily using a high-voltage power supply, depending on the type used), produces ozone gas.

Ozone generators are known in water disinfection. However, they are generally operated in an uncontrolled or lightly controlled manner, whereby they are activated by a user for a duration, such as a few days per month, or operated on permanent basis but at a low duty cycle, such as being activated for, say, 10% of the time as a preventative measure. Ozone generators do not generally have a particularly large lifespan, and so it can be expensive to operate them in this manner as they have to be frequently replaced or serviced.

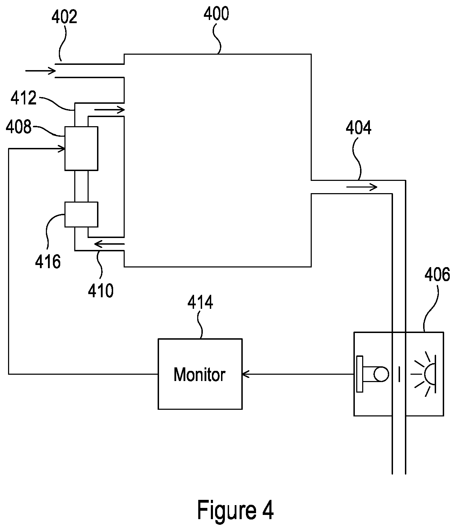

Figure 4 shows at a top level an embodiment of the invention installed in a fluid flow system. In this embodiment, a liquid tank 400 forms part of a fluid flow system, such as one operating in an application as mentioned herein. It has an inlet 402 and an outlet 404. The outlet supplies liquid where needed, via a sensor 406 (and its substrate) as described herein. An ozone generation cell 408 is connected via a supply pipe 410 and a return pipe 412 to the tank. A pump (not shown) is fitted alongside the ozone generation cell 408. The sensor 406 is monitored (414) as described herein either by a human or machine.

Note that the location of the sensor 406 may be in places other than the outlet as shown in Figure 4. In another embodiment it may be located, instead of or as well, for example at 416, just upstream of the ozone generation cell 408. This location is convenient for monitoring biofilm build-up within the tank, as well as on the outlet. Systems may have more than one sensor deployed, as would be readily appreciated by the normally skilled person.

In a first mode of operation, under "clean" conditions, i.e. where no, or an acceptable amount of biofilm is detected by the monitor, the ozone generation cell 408 is not activated. When a level of biofilm is detected above an acceptable threshold then the monitor is adapted to activate the ozone generation cell, and the pump, causing ozone gas to be generated and dissolved into the liquid. This fluid is pumped around the tank, and drawn off as required through outlet 404. The ozone in the liquid acts to kill off bacteria present within the liquid. As this liquid is drawn past the substrate of the sensor it also kills off bacteria present on the substrate, and so the biofilm on the substrate is dispersed. Monitoring of the substrate in the sensor continues, and when the biofilm has reduced below a threshold level the ozone generation cell is switched off.

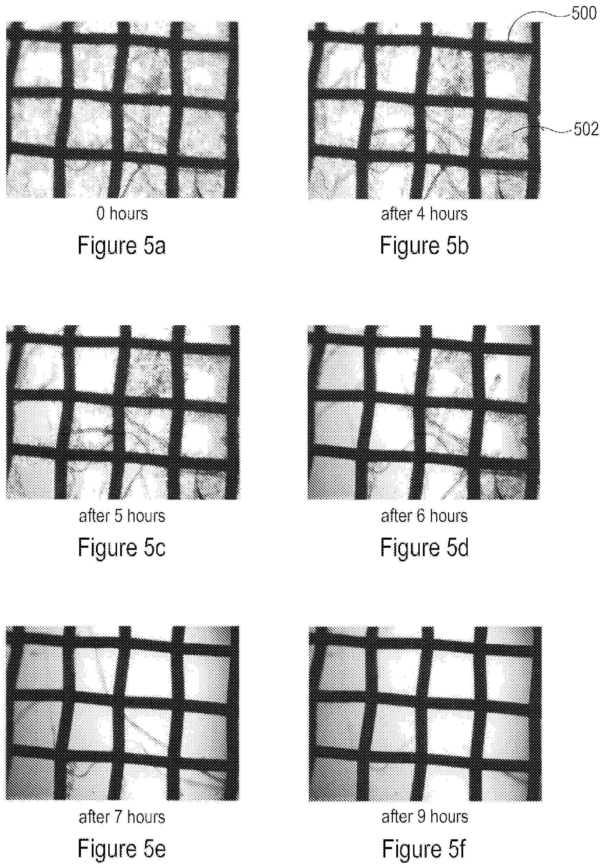

Experimental results of operation in this mode are shown in Figure 5. A strong *Pseudomonas aeruginosa* concentration in water (>100k CFU/ml) was cultured in a test setup, having a sensor with a stainless steel wire mesh substrate 500. This caused heavy biofilm growth, as is visible 502 in Fig 5a. At time zero the cell 408 was activated. The presence of biofilm is shown at time intervals of b) 4 hours; c) 5 hours; d) 6 hours, e) 7 hours and f) 9 hours, after which the cell 408 was switched off. It can be seen that the biofilm reduces until at 9 hours it is not detectable in the image. Tests showed it had reduced the *Pseudomonas aeruginosa* concentration to below 100 CFU/ml; a log₁₀ 3 reduction.

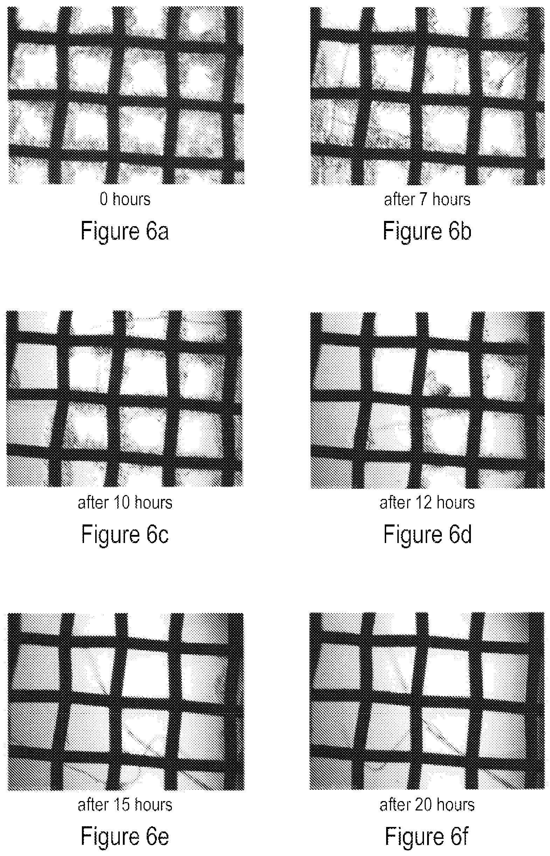

In a second mode of operation, again under clean conditions, the cell is not activated. When biofilm above a predetermined threshold is detected then the ozone generation cell is switched on for a preset time, such as 90 minutes (although clearly this will vary and be chosen depending upon the size of the system in which it is deployed). The cell 408 is then switched off, while the biofilm levels continue to be monitored. Experimental results of operation in this mode are shown in Figure 6. A similar *Pseudomonas aeruginosa* concentration in water (>100k CFU/ml) was cultured in a test setup as before, with the same sensor. The biofilm growth visible at time zero is shown in Fig 6a, at which point the cell 408 was activated for a time duration of 90 minutes. Ozone concentration was maintained at >0.4ppm during this period, after which the cell was switched off. The presence of biofilm is shown at time intervals of b) 7 hours; c) 10 hours; d) 12 hours, e) 15 hours and f) 20 hours. It can be seen that the biofilm again reduces, but over a longer period than when the cell was activated throughout the test period. However, in 20 hours the *Pseudomonas aeruginosa* concentration was found to have fallen to an average level of 1.5 CFU/ml. The short activation duration of the cell helps to increase the life of the cell 408 whilst still being effective.

Other embodiments may employ other means for disinfection, such as by using e.g. a suitable dose of a chemical such as sodium hypochlorite, chlorine dioxide, bromine, etc. or non-oxidising biocides and others as would be known to a person of ordinary skill in the art. Again, this may be controlled by a monitor as described above, to minimize or reduce the amount of disinfectant added to the liquid. Where the chemical is coloured differently to that of the liquid in the fluid flow system then, by use of a colour camera, any colour tint to the liquid as detected by the camera can be used to give an indication of the dosing levels used, as explained above.

The pattern of growth of material on the substrate can be monitored by subtracting successive images taken by the camera over a variety of time intervals (the intervals chosen to show an observable difference between images). The resulting differential images can reveal that when detritus such as silt or other particles stick, they form in a pattern that is unlike a pattern formed by biofilm over a similar time period. For example, silt or other particles travel along in the fluid flow and so build up at places commensurate with the flow dynamics. Such material might build up uniformly on top of the previously deposited material, or perhaps into corners first then sloughing down off the corners - rather like the way groynes on a beach trap the sand on one side due to the flow. This type of material will build up only on the sides of existing structures that face towards the fluid flow. In comparison, biofilm tends to grow in very characteristic ways- one of which is small pyramid shapes form and then extend forming the stringy fronds. Unlike for silt and particles that are just carried along with the flow, it is possible for biofilm (as a conglomeration of living organisms) to also grow in a direction against the fluid flow direction. Thus, it is relatively simple to identify, either by a trained individual, or by a trained artificially intelligent system, the growth of biofilm and the difference between biofilm and general detritus.

Applications of the invention will be clear to the normally skilled person, but may include (but are not limited to): cooling systems, such as cooling towers, chilled water systems, wet air conditioning systems, adiabatic cooling systems; process water systems; water features and fountains; water parks and wet adventure rides; closed heating and cooling systems; drinks and vending machines; humidifier systems; swimming pools, hot tubs and Jacuzzis; humidifiers; hot and cold domestic water systems; water supplies in agriculture, horticulture and animal husbandry; aquaculture and fish rearing; still and river water monitoring; stored and distributed water systems in ships, trains, airplanes, coaches and other vehicles; brewing and beer lines, drinks lines in pubs and restaurants; distilleries; shower systems; soft and carbonated drinks manufacturing; toilets and bathrooms in hospitals and other medical or pharmaceutical facilities, factories, commercial and domestic environments; hospital acute water systems, including renal dialysis.

The functions described herein as provided by individual components could, where appropriate, be provided by a combination of components instead. Similarly, functions described as provided by a combination of components could, where appropriate, be provided by a single component.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is defiend by the appended claims.

## Claims

1. A sensor (102) for the detection of biofilm in a fluid flow system comprising a substrate (106) upon which a biofilm may grow, a camera (108) and an illumination means (104), wherein the substrate (106) is arranged in use to be located in-situ and submerged in the fluid flow system, the camera (108) being arranged to take a plurality of images of the substrate (106), and the sensor (102) being arranged to provide an image of the substrate (106) and the spatial extent, shape, extent, colouration, and/or motion of any biofilm present, and further wherein the camera (108) has a lens arranged to view the substrate in focus, whereby the substrate (106) comprises of a grid of holes (202) allowing background light to pass therethrough, and wherein the illumination means (104) is arranged to provide a light background in contrast to a dark substrate.

2. A sensor as claimed in claim 1 wherein the substrate (106) comprises of a material having holes that allow a background to be viewed in contrast to the substrate.

3. A sensor as claimed in any of the above claims wherein the substrate (106) comprises of an array of holes in a sheet (200).

4. A sensor as claimed in claim 3 wherein the grid of holes is an irregular grid, having holes of different dimensions therein.

5. A sensor as claimed in any of claims 1 to 4 wherein the substrate comprises a woven wire mesh (300).

6. A sensor (102) as claimed in any of the above claims wherein the substrate (106) comprises a metal, a plastic, a ceramic or a glass material.

7. A sensor (102) as claimed in any of the above claims wherein the sensor further comprises means to detect a variation in images taken at different times, or to record video sequences.

8. A sensor (102) as claimed in claim 7 wherein the processor has an associated memory, and is arranged to run instructions stored on the memory that implement a machine learning algorithm for the detection of short term changes in the video image sequence.

9. A sensor as claimed in any of the above claims, further comprising means to create a turbulent fluid flow around the substrate, wherein the means to create a turbulent fluid flow comprises a turbulence generating element that creates a shedding vortex caused by flow of the fluid past the element.

10. A sensor as claimed in any of the claims 1-8, further comprising means to create a turbulent fluid flow around the substrate, wherein the means to create a turbulent flow comprises a means for moving the substrate.

11. A system comprising a biofilm sensor (102) as claimed in any of the above claims, and a rectification means, wherein the system is arranged to activate the rectification means if a biofilm detection above a predetermined threshold is detected, and wherein the rectification means comprises at least one of a chemical dosing system, and an ozone generation means.

12. A system as claimed in claim 11, when used with a chemical dosing system, wherein a colour of images taken by the camera is analysed to provide a measure of the quantity of the chemical from the chemical dosing system present in the fluid flow system.

13. A method of sensing biofilm in a fluid flow system comprising arranging a sensor as claimed in any of claims 1 to 10 in the fluid flow system, and monitoring an output of the sensor for signs of build-up of biofilm on the substrate.

## Patentansprüche

1. Sensor (102) zum Nachweis von Biofilm in einem Fluidströmungssystem, umfassend ein Substrat (106), auf dem ein Biofilm wachsen kann, eine Kamera (108) und ein Beleuchtungsmittel (104), wobei das Substrat (106) bei Verwendung so angeordnet ist, dass es sich in situ befindet und in das Fluidströmungssystem eingetaucht ist, wobei die Kamera (108) so angeordnet ist, dass sie eine Vielzahl von Bildern des Substrats (106) aufnimmt, und der Sensor (102) so angeordnet ist, dass er ein Bild des Substrats (106) und der räumlichen Ausdehnung, Form, Ausdehnung, Färbung und/oder Bewegung eines vorhandenen Biofilms bereitstellt, und wobei ferner die Kamera (108) eine Linse aufweist, die so angeordnet ist, dass sie das Substrat im Fokus betrachtet, wodurch das Substrat (106) ein Raster von Löchern (202) umfasst, die es ermöglichen, dass Hintergrundlicht dadurch hindurchtritt, und wobei das Beleuchtungsmittel (104) so angeordnet ist, dass es einen hellen Hintergrund im Kontrast zu einem dunklen Substrat bereitstellt.

2. Sensor nach Anspruch 1, wobei das Substrat (106) ein Material mit Löchern umfasst, die es ermöglichen, dass ein Hintergrund im Kontrast zu dem Substrat betrachtet wird.

3. Sensor nach einem der vorhergehenden Ansprüche, wobei das Substrat (106) eine Anordnung von Löchern in einer Platte (200) umfasst.

4. Sensor nach Anspruch 3, wobei das Lochraster ein unregelmäßiges Raster ist, das Löcher mit unterschiedlichen Abmessungen aufweist.

5. Sensor nach einem der Ansprüche 1 bis 4, wobei das Substrat ein gewebtes Drahtgeflecht (300) umfasst.

6. Sensor (102) nach einem der vorhergehenden Ansprüche, wobei das Substrat (106) ein Metall, einen Kunststoff, eine Keramik oder ein Glasmaterial umfasst.

7. Sensor (102) nach einem der vorhergehenden Ansprüche, wobei der Sensor ferner Mittel umfasst, um eine Variation in Bildern zu nachzuweisen, die zu unterschiedlichen Zeiten aufgenommen wurden, oder um Videosequenzen aufzuzeichnen.

8. Sensor (102) nach Anspruch 7, wobei der Prozessor einen zugeordneten Speicher aufweist und so angeordnet ist, dass er auf dem Speicher gespeicherte Anweisungen ausführt, die einen Algorithmus zum maschinellen Lernen zum Nachweisen von kurzfristigen Änderungen in der Videobildsequenz implementieren.

9. Sensor nach einem der vorhergehenden Ansprüche, ferner umfassend Mittel, um eine turbulente Fluidströmung um das Substrat zu erzeugen, wobei die Mittel, um eine turbulente Fluidströmung zu erzeugen, ein Turbulenzerzeugungselement umfassen, das einen ablösenden Wirbel erzeugt, der durch eine Strömung des Fluids an dem Element vorbei bewirkt wird.

10. Sensor nach einem der Ansprüche 1-8, ferner umfassend Mittel zum Erzeugen einer turbulenten Fluidströmung um das Substrat, wobei die Mittel zum Erzeugen einer turbulenten Strömung ein Mittel zum Bewegen des Substrats umfasst.

11. System, umfassend einen Biofilmsensor (102) nach einem der vorhergehenden Ansprüche und ein Rektifikationsmittel, wobei das System so angeordnet ist, dass es das Rektifikationsmittel aktiviert, wenn ein Biofilmnachweis über einem vorbestimmten Schwellenwert nachgewiesen wird, und wobei das Rektifikationsmittel zumindest eines von einem chemischen Dosiersystem und einem Ozonerzeugungsmittel umfasst.

12. System nach Anspruch 11,
bei Verwendung mit einem chemischen Dosiersystem, wobei eine Farbe von Bildern, die von der Kamera aufgenommen wurden, analysiert wird, um ein Maß für die Menge der Chemikalie aus dem chemischen Dosiersystem bereitzustellen, die in dem Fluidströmungssystem vorhanden ist.

13. Verfahren zum Erfassen von Biofilm in einem Fluidströmungssystem, umfassend das Anordnen eines Sensors nach einem der Ansprüche 1 bis 10 in dem Fluidströmungssystem und das Überwachen einer Ausgabe des Sensors auf Anzeichen einer Ansammlung von Biofilm auf dem Substrat.

## Revendications

1. Capteur (102) destiné à la détection de biofilm dans un système d'écoulement de fluide comprenant un substrat (106) sur lequel un biofilm peut croître, une caméra (108) et un moyen d'éclairage (104), ledit substrat (106) étant agencé lors de l'utilisation pour être situé in situ et immergé dans le système d'écoulement de fluide, la caméra (108) étant agencée pour prendre une pluralité d'images du substrat (106), et le capteur (102) étant agencé pour fournir une image du substrat (106) et de l'étendue spatiale, de la forme, de l'étendue, de la coloration et/ou du mouvement de tout biofilm présent, et en outre ladite caméra (108) comportant une lentille agencée pour voir le substrat en mise au point, moyennant quoi
le substrat (106) comprend une grille de trous (202) permettant à la lumière d'arrière-plan de passer à travers celui-ci, et ledit moyen d'éclairage (104) étant agencé pour fournir un arrière-plan clair en contraste avec un substrat sombre.

2. Capteur selon la revendication 1, ledit substrat (106) comprenant un matériau possédant des trous qui permettent de voir un arrière-plan en contraste avec le substrat.

3. Capteur selon l'une quelconque des revendications ci-dessus, ledit substrat (106) comprenant un réseau de trous dans une feuille (200).

4. Capteur selon la revendication 3, ladite grille de trous étant une grille irrégulière, comportant des trous de dimensions différentes.

5. Capteur selon l'une quelconque des revendications 1 à 4, ledit substrat comprenant un treillis métallique tissé (300).

6. Capteur (102) selon l'une quelconque des revendications ci-dessus, ledit substrat (106) comprenant un métal, un plastique, une céramique ou un matériau en verre.

7. Capteur (102) selon l'une quelconque des revendications ci-dessus, ledit capteur comprenant en outre des moyens pour détecter une variation d'images prises à différents moments, ou pour enregistrer des séquences vidéo.

8. Capteur (102) selon la revendication 7, ledit processeur possédant une mémoire associée, et étant agencé pour exécuter des instructions stockées sur la mémoire qui mettent en œuvre un algorithme d'apprentissage automatique pour la détection de changements à court terme dans la séquence d'images vidéo.

9. Capteur selon l'une quelconque des revendications ci-dessus, comprenant en outre un moyen pour créer un écoulement de fluide turbulent autour du substrat, ledit moyen pour créer un écoulement de fluide turbulent comprenant un élément générateur de turbulence qui crée un tourbillon de dispersion engendré par l'écoulement du fluide autour de l'élément.

10. Capteur selon l'une quelconque des revendications 1 à 8, comprenant en outre un moyen pour créer un écoulement de fluide turbulent autour du substrat, ledit moyen pour créer un écoulement turbulent comprenant un moyen pour déplacer le substrat.

11. Système comprenant un capteur de biofilm (102) selon l'une quelconque des revendications ci-dessus, et un moyen de rectification, ledit système étant agencé pour activer le moyen de rectification si une détection de biofilm au-dessus d'un seuil prédéfini est détectée, et ledit moyen de rectification comprenant au moins l'un d'un système de dosage chimique et d'un moyen de génération d'ozone.

12. Système selon la revendication 11,
lorsqu'il est utilisé avec un système de dosage de produit chimique, une couleur d'images prises par la caméra étant analysée pour fournir une mesure de la quantité de produit chimique provenant du système de dosage de produit chimique présent dans le système d'écoulement de fluide.

13. Procédé de détection d'un biofilm dans un système d'écoulement de fluide comprenant l'agencement d'un capteur selon l'une quelconque des revendications 1 à 10 dans le système d'écoulement de fluide, et la surveillance d'une sortie du capteur en vue de signes d'accumulation de biofilm sur le substrat.
